# EUROPÄISCHE PATENTSCHRIFT

(11) **EP 0 484 469 B1**
(45) Veröffentlichungstag und Bekanntmachung des Hinweises auf die Patenterteilung: **25.06.1997**
(21) Anmeldenummer: 91905775.2
(22) Anmeldetag: 14.03.1991
(51) Int. Cl.: B60T 8/40, B60T 8/50, B60T 8/42, B60T 8/44

(54) **BREMSDRUCKREGELVORRICHTUNG**
BRAKE-PRESSURE REGULATING DEVICE
DISPOSITIF DE REGULATION DE LA PRESSION DE FREINAGE

(30) Priorität: 25.05.1990 DE 4016745
(43) Veröffentlichungstag der Anmeldung: 13.05.1992
(73) Patentinhaber: ITT Automotive Europe GmbH, 60488 Frankfurt (DE); ALFRED TEVES METALLWARENFABRIK GMBH & CO. OHG, 51702 Bergneustadt (DE)
(72) Erfinder: REINARTZ, Hans-Dieter, D-6000 Frankfurt am Main 50 (DE); VOLZ, Peter, D-6100 Darmstadt (DE); BECK, Erhard, D-6290 Weilburg (DE); GOOSSENS, André, F., L., B-2840 Rumst (BE)
(86) Internationale Anmeldenummer: EP9100485
(87) Internationale Veröffentlichungsnummer: WO9118775

(56) Entgegenhaltungen:
- DE-A- 3 731 603
- FR-A- 2 317 525
- FR-A- 2 318 058
- GB-A- 2 093 544
- GB-A- 2 117 850
- US-A- 4 099 793
- PATENT ABSTRACTS OF JAPAN vol. 14, no. 247 (M-978)(4190) 25 Mai 1990, & JP-A-02 068251 (TOYOTA) 07 März 1990, siehe das ganze Dokument
- ENGINEERING, MATERIALS AND DESIGN. vol. 23, no. 11, November 1979, LONDON GB Seiten 31 - 35; "Design evaluation of the Demag brake motor" siehe Seite 31, linke Spalte, letzter Absatz rechte Spalte, Absatz 1; Figur 1b

## Beschreibung

Die Erfindung betrifft eine Bremsdruckregelvorrichtung, insbesondere für Kraftfahrzeuge, mit einem Antiblockierregelsystem (ABS) und/oder einem Antriebsschlupfregelsystem (ASR), die mit einem fluidischen, insbesondere hydraulischen, Druckmittel arbeitet, bestehend aus einem Hauptzylinder, einem oder mehreren Radzylindern für Radbremsen, einem mehrere Ventilelemente umfassenden Druckmodulator für die Veränderung des hydraulischen Drucks in den Radzylindern der Radbremsen während eines Bremsdruckregelmodus, mindestens einer motorgetriebenen Pumpe zur Erzeugung eines fluidischen, insbesondere hydraulischen Drucks, einem elektronischen Regler.

Der Gegenstand der Erfindung geht von Bremsanlagen aus, wie sie beispielsweise in der DE 37 31 603 A1 beschrieben werden.

Derartige Bremsanlagen sind mit einem Antiblockierregelsystem und/oder Antriebsschlupfregelsystem ausgerüstet. Sie weisen eine oder zwei Hilfspumpen auf. Diese Hilfspumpen fördern während des Antiblockierregelmodus Druckmittel in einen Druckmodulator. Der Druckmodulator umfasst mehrere hydraulische Ventile. Insbesondere sind im Druckmodulator Ein- und Auslassventile vorgesehen, die bestimmten Radzylindern zugeordnet sind.

Die Treiberstufe des elektronischen Reglers steuert diese Ein- und Auslassventile entsprechend dem im Regler installierten Regelalgorithmus. Bei geöffnetem Auslassventil und geschlossenem Einlassventil wird eine Druckabbauphase im Radzylinder erzeugt. Bei geschlossenem Einlassventil und geschlossenem Auslassventil kommt es zu einer Druckkonstanthaltephase. Bei geöffnetem Einlassventil und geschlossenem Auslassventil wird eine Druckwiederaufbauphase erreicht.

Es sind weiterhin hydraulische Schaltungen beschrieben worden, bei denen das Einlassventil eine Drosselwirkung aufweist.

In der DE 25 38 016 A1 ( FR 23 17 525) wird eine Bremsanlage beschrieben, die eine Pumpe aufweist, deren Kolben von einem hin- und hergehenden Linearmotor angetrieben wird. Der Kolben der Pumpe ist über eine Kupplungseinrichtung mit einem Modulatorventil verbunden, so daß bei betätigter Kupplung die Axialbewegung des Kolbens genutzt wird, das Modulatorventil umzustellen.

Außerdem ist es bekannt, der Anker bzw. Stator eines Drehelektromotors derart zu gestalten, daß Komponenten der im Betrieb ausgeübten magnetischen Kräfte zu einer Axalverschiebung des Ankers führen. Dies wird im allgemeinen dazu genutzt, den Motor abzubremsen.

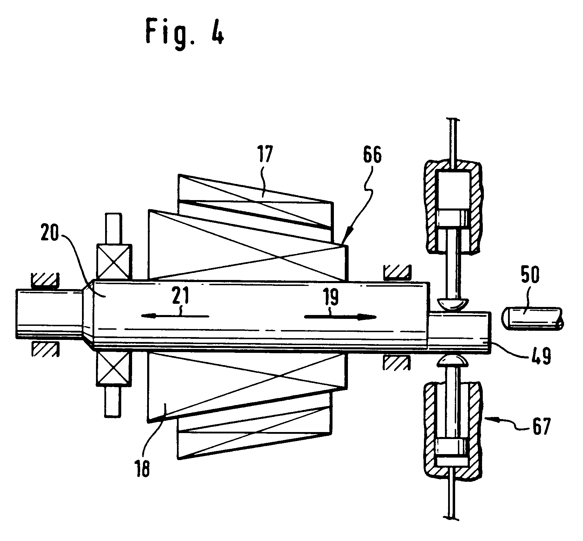

In den Ausführungsbeispielen der Figuren 4 bis 7 der deutschen Offenlegungsschrift 3731603 ist ein elektrischer Antriebsmotor für eine Pumpe für blockiergeschützte hydraulische Bremsanlagen beschrieben worden, dessen Anker axial beweglich ist.

In der Praxis hat es sich als wünschenswert herausgestellt, die Einlassventile der Druckmodulatoren des Standes der Technik, beispielsweise die SO-Ventile des Gegenstand der oben genannten Offenlegungsschrift, oder die Einlassventile mit Drosselfunktion des Gegenstands der oben genannten älteren Anmeldung schneller schalten zu können, als dies bisher möglich ist.

Der vorliegenden Erfindung liegen folgende Aufgaben zugrunde:

Die Einlassventile für die Radzylinder von Bremsanlagen, wie sie oben beschrieben wurden, sollen schneller geschaltet werden können als dies beim Stand der Technik möglich ist. Der Begriff "Einlassventil" ist allgemein zu verstehen. Es kann sich dabei um Einlassventile gemäß der oben genannten deutschen Offenlegungsschrift, gemäß der oben genannten älteren deutschen Patentanmeldung P 3919842.1, bei der die Einlassventile Drosselfunktion übernehmen, oder um andere Typen von Einlassventilen handeln, die zur Regelung des Bremsdrucks im Radzylinder dienen. Die Erfindung mach sich insbesondere zur Aufgabe, einen sehr schnellen Druckabbau im Radzylinder während des Regelmodus zu erzielen. Weiterhin soll das Pedalgefühl verbessert werden.

Die gestellten Aufgaben werden erfindungsgemäß dadurch gelöst, daß mindestens ein Teil des Ankers des Motors als axial bewegliches Schuborgan ausgebildet ist, das mindestens ein Ventilelement des Druckmodulators betätigt, und zwar vorzugsweise ein Einlassventil.

Weiterhin wird vorgeschlagen, daß mindestens zwei Einlassventile über einen Kraftverteilungsmechanismus, vorzugsweise über einen Waagebalken, durch das Schuborgan schaltbar ausgebildet und angeordnet sind.

In einem bevorzugten Ausführungsbeispiel wird vorgesehen, daß ein Ventilelement (Sperrventil) so ausgebildet und angeordnet ist,
daß es durch seine Betätigung durch das Schuborgan eine erste ungedrosselte Verbindung zwischen dem Hauptzylinder und dem Radzylinder sperrt, daß bei Sperrung der ersten ungedrosselten Verbindung der Druckmittelstrom über eine zweite Verbindung von Pumpe und Hauptzylinder durch ein Drosselorgan zum Radzylinder geführt wird.

In weiterer Ausgestaltung dieses Ausführungsbeispiels wird vorgeschlagen, daß das Sperrventil so ausgebildet und angeordnet ist, daß es in seiner Sperr- oder Schaltstellung durch den Pumpendruck gehalten wird.

In weiterer Ausgestaltung dieses Konstruktionsprinzips kann das Sperrventil so ausgebildet und angeordnet sein, daß es in seiner Sperr- oder Schaltstellung durch den Hauptzylinderdruck gehalten wird.

Alternativ wird vorgeschlagen, daß das Sperrventil so ausgebildet und angeordnet ist, daß es in seiner Sperr- oder Schaltstellung durch den Pumpendruck und Hauptzylinderdruck gehalten wird. Das oben genannte Drosselorgan kann als Blende ausgebildet

sein.

In einem weiteren Ausführungsbeispiel kann das Drosselorgan als Strombegrenzungsventil ausgebildet sein.

Zusätzlich wird vorgeschlagen, daß strömungsmäßig zwischen dem Drosselorgan, insbesondere dem Strombegrenzungsventil, und dem Radzylinder eine Blende angeordnet ist.

An die Stelle eines durch den Anker bewegten Schuborgans wird in einem weiteren Ausführungsbeispiel vorgeschlagen, daß ein Magnetaggregat mit einem axial bewegliches Schuborgan vorgesehen ist, das das oben beschriebene Sperrventil schaltet.

Für die Konstruktion des Antriebsmotors wird vorgeschlagen, daß die Wicklungen des Stators und/oder des Ankers des Antriebsmotors für die Pumpen so ausgebildet sind, daß sie den axialen Schub des Ankers beim Start des Motors verstärken.

Insbesondere kann vorgesehen sein, daß die Wicklungen des Stators und/oder des Ankers des Antriebsmotors für die Pumpen konisch ausgebildet sind.

Durch die Erfindung werden folgende Vorteile erreicht:

Die gewünschte schnelle Schaltung der Einlassventile mit oder ohne Drosselfunktion wird in überraschend wirkungsvoller Weise und mit relativ einfachen Mitteln erreicht.

Durch den Einsatz des oben genannten Sperrventils wird praktisch sofort die Verbindung zwischen Hauptzylinder und Radzylinder unterbrochen. Gleichzeitig strömt Druckmittel aufgrund der Schaltung des Sperrventils gedrosselt über ein Strombegrenzungsventil aus der Pumpe in den Radzylinder. Durch den Einsatz relativ einfacher hydraulischer Mittel wird so in überraschender Weise ein schneller Druckabbau im Radzylinder erreicht. Das Pedalgefühl wird erheblich verbessert.

Weitere Einzelheiten der Erfindung, der Aufgabenstellung und der erzielten Vorteile sind der folgenden Beschreibung von Ausführungsbeispielen der Erfindung zu entnehmen.

Die Figuren 1 und 2 zeigen je ein Ausführungsbeispiel.

Figur 3 zeigt eine Variante zum Ausführungsbeispiel gemäß Figur 2.

Figur 4 zeigt in schematischer Darstellung einen elektrischen Antriebsmotor für die Pumpe der Bremsdruckregelvorrichtung.

Bei der nachfolgenden Beschreibung der Ausführungsbeispiele wird von einem Stand der Technik ausgegangen, wie er sich in Form der oben genannten Dokumente darstellt.

Die Beschreibung und die Figuren dieser Schriften können zur Erläuterung der Ausgangsbasis für die nachfolgend beschriebenen Ausführungsbeispiele herangezogen werden.

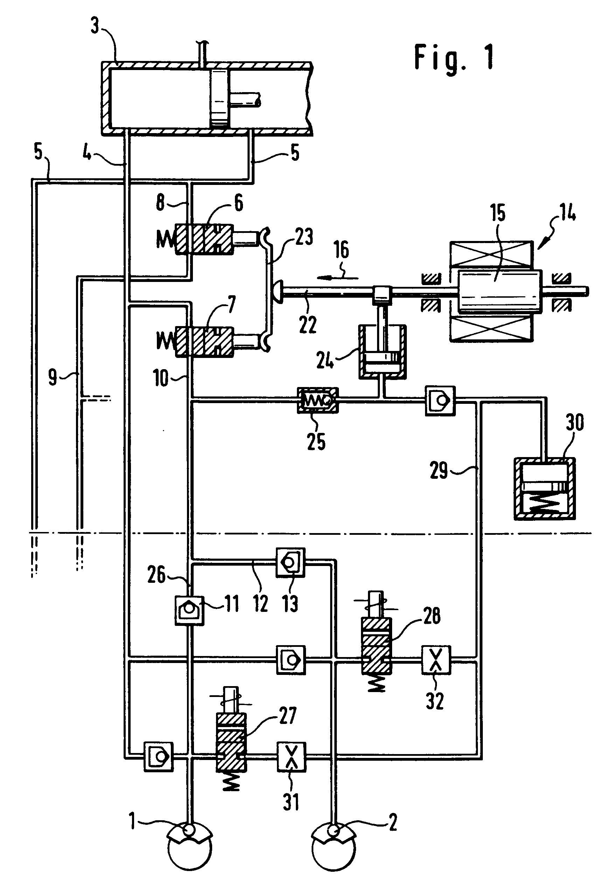

Aus Vereinfachungsgründen ist in Figur 1 die Bremsdruckregelvorrichtung lediglich für zwei Bremsen dargestellt. Die Radzylinder dieser Bremsen sind mit 1, 2 bezeichnet. Der Hauptzylinder, der als Tandemhauptzylinder ausgebildet ist, trägt die Bezugsziffer 3.

Bei Betätigung des Tandemhauptzylinders im Normalbremsmodus wird Druckmittel über die Leitungen 4, 5 in die Bremsanlage gefördert. Bei der weiteren Beschreibung wird im wesentlichen von dem Bremskreislauf ausgegangen, der über die Leitung 4 mit dem Hauptzylinder in Verbindung steht.

Im Normalbremsmodus sind die Einlassventile 6, 7 geöffnet. Dies entspricht ihrer Ruhelage. Bremsflüssigkeit kann in dieser Situation über die Leitung 8 durch das offene Einlassventil 6 in die Leitung 9 gelangen.

Druckmittel, das im Normalbremsmodus in die Leitung 4 gefördert wird, durchströmt das Einlassventil 7, die Leitung 10 und gelangt über das Rückschlagventil 11 in den Radzylinder 1. Über die Zweigleitung 12 und das Rückschlagventil 13 wird der zweite Radzylinder 2 versorgt.

Im Antiblockierregelmodus (ABS-Modus) wird aufgrund elektrischer Ausgangssignale des elektronischen Reglers der elektrische Motor, der in seiner Gesamtheit mit 14 bezeichnet ist, in Betrieb gesetzt.

Der Anker 15 dieses Motors erfährt beim Start einen Axial-Schub in Richtung des Pfeils 16. Dieser Effekt ist bekannt bei sogenannten Bremsmotoren, die durch den Axial-Schub beim Start eine mechanische Bremse lösen.

Um diesen Axial-Schub zu verstärken, können die Statorwicklung 17 und die Anklerwicklung 18 konisch ausgeführt sein, siehe hierzu Figur 4.

In Figur 4 ist der Axial-Schub durch den Pfeil 19 wiedergegeben. Die Welle des Ankers trägt die Bezugsziffer 20. Die angetriebene Pumpe ist mit 67 bezeichnet.

Wird die Stromzufuhr für den Motor unterbrochen, bewegt sich der Motor zurück entsprechend dem Pfeil 21 in seine Ruhelage.

Nach dem Ausführungsbeispiel nach Figur 1 ist ein Schuborgan 22 mit dem Anker verbunden, das beim Start des Motors in Richtung des Pfeils 16 auf einen Waagebalken 23 einwirkt.

Sobald der Motor aufgrund eines Ausgangssignals des elektronischen Reglers in Bewegung gesetzt wird, wird eine Kraft in Richtung des Pfeils 16 in Figur 1 erzeugt und die beiden Einlassventile 6, 7 werden in ihre Sperrposition geschaltet.

Im ABS-Regelmodus wird dann durch die vom Motor angetriebene Pumpe 24 Druckmittel über das Druckbegrenzungsventil 25 in die Leitungen 12 und 26 gepumpt. Von dort gelangt Druckmittel in die Radzylinder 1, 2.

Diese Druckmittelzufuhr, beziehungsweise der Anstieg des Drucks in den Radzylindern, wird im Rahmen des ABS-Regelmodus dann notwendig, wenn der Regelalgorithmus einen Wiederaufbau des Drucks verlangt.

In der Druckabbauphase werden die Auslassventile 27, 28 elektromagnetisch in Auslasspostion geschaltet, während die Einlassventile geschlossen bleiben.

Bei den Auslassventilen 27, 28 handelt es sich um sogenannte Stromlos-Geschlossen-Ventile (SG-Ventile). Die Betätigungssignale erhalten die SG-Ventile von der Treiberstufe des elektronischen Reglers.

Während der Druckabbauphase gelangt Druckmittel aus dem Radzylinder über die offenen SG-Ventile in die Leitung 29 und von dort in einen Speicher 30. Den Auslassventilen nachgeschaltet sind je eine Drossel 31, 32.

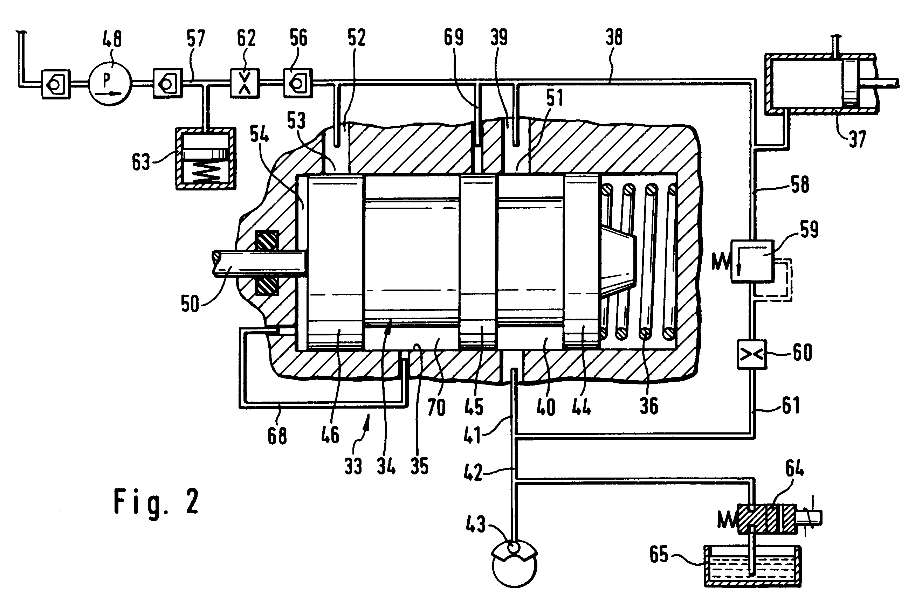

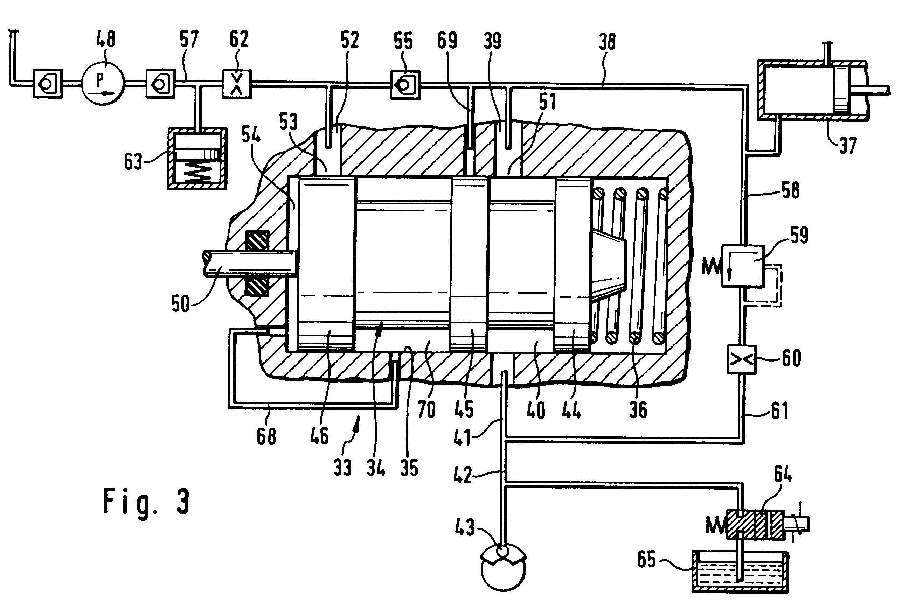

Bei den Ausführungsbeispielen der Figuren 2 und 3 ist ein Sperrventil, das in seiner Gesamtheit mit 33 bezeichnet ist, vorgesehen, das im wesentlichen aus einem Kolben 34 besteht, der in einem Zylinder 35 unter der Spannung der Feder 36 steht.

Im Normalbremsmodus gelangt Druckmittel vom Hauptzylinder 37 ungehindert über die Leitungen 38, 39 in den Ringraum 40 und von dort über die Leitungen 41, 42 zum Radzylinder 43. Der Ringraum 40 wird durch zwei Bunde 44, 45 gebildet.

Ein weiteres Bund 46 befindet sich am linken Ende des Kolbens 34. Im Regelmodus wird durch den elektronischen Regler der in Figur 4 gezeigte Elektromotor in Betrieb gesetzt. Er treibt die Pumpe 48, siehe Figuren 2 und 3.

Wie bereits oben geschildert, übt der Anker des Motors, der in seiner Gesamtheit mit 66 bezeichnet ist, über die Ankerwelle 20 des Motors nach Figur 4 eine Schubkraft in Richtung des Pfeils 19 aus und wirkt über das Schuborgan 49 , auf das Kraftübertragungsorgan 50, das auch in den Figuren 2 und 3 dargestellt ist.

Das Kraftübertragungsorgan, siehe hierzu Figur 2 und 3, verschiebt den gesamten Kolben 34 infolge des Startschubs des Motors in seine rechte, geschaltete Position. Der Querschnitt 51, der als Kanal ausgebildeten Leitung 39, wird dadurch durch den Bund 45 verschlossen. Gleichzeitig wird der im Normalbremsmodus durch den Bund 46 geschlossene Querschnitt 53 der als Kanal ausgebildeten Leitung 52 geöffnet. Druckmittel kann nunmehr in den sich erweiternden Druckraum 54 fließen.

Dieses Druckmittel kann von der Pumpe und/oder vom Hauptzylinder in den Druckraum 54 gefördert werden.

Nach dem Ausführungsbeispiel gemäß Figur 2 wird sowohl von der Pumpe als auch vom Hauptzylinder Druckmittel in den Druckraum 54 gefördert.

Beim Ausführungsbeispiel gemäß Figur 3 ist der Druckraum 54 gegenüber dem Hauptzylinder 37 durch das Rückschlagventil 55 abgesperrt. Bei dem Ausführungsbeispiel nach Figur 3 kann der Druckraum 54 also nur durch die Pumpe 48 mit Druckmittel gefüllt werden.

Zu beachten ist, daß das Druckniveau der Pumpe höher ist als das Druckniveau des Hauptzylinders, so daß sich bei Einsatz der Pumpe das Rückschlagventil 56 nach Figur 2 und das Rückschlagventil 55 nach Figur 3 öffnen.

Im Antiblockierregelmodus, und dies gilt für die Ausführungsbeispiele nach den Figuren 2 und 3 gleichermaßen, fließt Druckmittel aus der Pumpe über die Drossel 62, die Leitungen 57, 38, 58 durch das Strombegrenzungsventil 59 durch die Drossel 60 in die Leitung 61 und von dort zum Radzylinder. 63 ist ein der Pumpe nachgeschalteter Dämpfungsspeicher. Dieser Druckmittelzufluss in den Radzylinder wird für die Druckwiederanstiegsphase während des Regelmodus benötigt. Die Drossel 60 und das Strombegrenzungsventil 59 dienen dazu, den Druckaufbaugradienten zu definieren, insbesondere zu begrenzen. Anstelle einer Drossel kann auch eine starre Blende eingesetzt werden. Für die Druckabsenkung im Radzylinder wird das elektromagnetisch betätigbare Auslassventil 64, das vom nicht dargestellten Regler gesteuert wird und als Stromlos-Geschlossen-Ventil ausgestaltet ist, geschaltet, das heißt geöffnet. Druckmittel kann daher aus dem Radzylinder in den Druckmittelbehälter 65 zurückfließen.

In einem weiteren Ausführungsbeispiel kann vor dem Auslassventil eine Blende eingeschaltet sein, um einen bestimmten Druckabfallgradienten zu erzielen. Beim Übergang vom Regelmodus in den Normalbremsmodus werden der Motor und damit die Pumpe abgeschaltet.

Beim Ausführungsbeispiel nach Figur 3 bewegt sich dann der Kolben 34 unter der Wirkung der zusammengedrückten Feder 36 in seine linke Ruhelage.

Beim Ausführungsbeispiel nach Figur 2 steht während des Regelmodus, wie dargestellt, der Kolben unter der Einwirkung des Drucks der Pumpe und des Hauptzylinders. Wenn die Pumpe abgeschaltet wird und der Hauptzylinder drucklos wird, bewegt sich der Kolben auch hier unter der Wirkung der Feder 36 nach links in seine Ruhelage.

Zum Zurückstellen des Kolbens 34 ist eine Druckentlastung der Pumpe nötig. Hierzu sind in den Ausführungsbeispielen nach den Figuren 2 und 3 die Leitungen 68 und 69 vorgesehen. Wenn sich der Kolben 34 aus seiner Sperrposition, rechte Position, in seine linke Ruheposition bewegt, wird Druckmittel aus dem Raum 54 über die Leitung 68 in den Ringraum 70 gefördert. Aus dem Ringraum 70 gelangt Druckmittel über die Leitung 69 in die Leitung 38. In der linken Position, Ruheposition des Kolbens 34, wird die Leitung 69 durch den Bund 45 verschlossen.

### Liste der Einzelteile

- 1: Radzylinder
- 2: Radzylinder
- 3: Hauptzylinder
- 4: Leitung
- 5: Leitung
- 6: Einlassventil
- 7: Einlassventil
- 8: Leitung
- 9: Leitung
- 10: Leitung
- 11: Rückschlagventil
- 12: Leitung
- 13: Rückschlagventil
- 14: Motor
- 15: Anker
- 16: Pfeil
- 17: Statorwicklung
- 18: Ankerwicklung
- 19: Pfeil
- 20: Welle
- 21: Pfeil
- 22: Schuborgan
- 23: Waagebalken
- 24: Pumpe
- 25: Druckbegrenzungsventil
- 26: Leitung
- 27: Auslassventil
- 28: Auslassventil
- 29: Leitung
- 30: Speicher
- 31: Drossel
- 32: Drossel
- 33: Sperrventil
- 34: Kolben
- 35: Zylinder
- 36: Feder
- 37: Hauptzylinder
- 38: Leitung
- 39: Leitung
- 40: Ringraum
- 41: Leitung
- 42: Leitung
- 43: Radzylinder
- 44: Bund
- 45: Bund
- 46: Bund
- 48: Pumpe
- 49: Schuborgan
- 50: Kraftübertragungsorgan
- 51: Querschnitt
- 52: Leitung
- 53: Querschnitt
- 54: Druckraum
- 55: Rückschlagventil
- 56: Rückschlagventil
- 57: Leitung
- 58: Leitung
- 59: Strombegrenzungsventil, Drosselorgan
- 60: Drossel, Blende
- 61: Leitung
- 62: Drossel
- 63: Dämpfungsspeicher
- 64: Auslassventil
- 65: Behälter
- 66: Anker
- 67: Pumpe
- 68: Leitung
- 69: Leitung
- 70: Ringraum

## Patentansprüche

1. Bremsdruckregelvorrichtung, insbesondere für Kraftfahrzeuge, mit einem Antiblockierregelsystem (ABS) und/oder einem Antriebsschlupfregelsystem (ASR), die mit einem fluidischen, insbesondere hydraulischen, Druckmittel arbeitet, bestehend aus einem Hauptzylinder (3), einem oder mehreren Radzylindern (1, 2) für Radbremsen, einem mehrere Ventilelemente umfassenden Druckmodulator für die Veränderung des hydraulischen Drucks in den Radzylindern (1, 2) der Radbremsen während eines Bremsdruckregelmodus, mindestens einem Motor (14) mit einem Anker (15, 66), dessen Drehbewegung zum Antrieb mindestens einer Pumpe zur Erzeugung eines fluidischen, insbesondere hydraulischen Drucks dient, und einem elektronischen Regler, dadurch **gekennzeichnet**, daß mindestens ein Teil des Ankers (15, 66) des Motors als axial bewegliches Schuborgan ausgebildet ist, das mindestens ein Ventilelement (33,6,7) des Druckmodulators betätigt.

2. Bremsdruckregelvorrichtung nach Anspruch 1, bei der der Druckmodulator Einlaßventile (6, 7) für die Radzylinder (1, 2) aufweist, dadurch **gekennzeichnet**, daß mindestens ein Einlaßventil (6,7) durch das Schuborgan (22) schaltbar ausgebildet und angeordnet ist.

3. Bremsdruckregelvorrichtung nach Anspruch 1 oder 2, dadurch **gekennzeichnet**, daß mindestens zwei Einlaßventile (6,7) über einen Kraftverteilungsmechanismus, vorzugsweise über einen Waagebalken (23), durch das Schuborgan (22) schaltbar ausgebildet und angeordnet sind.

4. Bremsdruckregelvorrichtung nach einem oder mehreren der vorangegangenen Ansprüche, dadurch **gekennzeichnet**, daß ein Ventilelement (Sperrventil) (33) so ausgebildet und angeordnet ist, daß es durch seine Betätigung durch das Schuborgan (49) eine erste ungedrosselte Verbindung zwischen dem Hauptzylinder (37) und dem Radzylinder (43) sperrt, daß bei Sperrung der ersten ungedrosselten Verbindung der Druckmittelstrom über eine zweite Verbindung von Pumpe (48) und Hauptzylinder (37) durch ein Drosselorgan (59) zum Radzylinder (43) geführt wird.

5. Bremsdruckregelvorrichtung nach einem oder mehreren der vorangegangenen Ansprüche, dadurch **gekennzeichnet**, daß das Sperrventil (33) so ausgebildet und angeordnet ist, daß es in seiner Sperrstellung durch den Pumpendruck gehalten wird.

6. Bremsdruckregelvorrichtung nach einem oder mehreren der vorangegangenen Ansprüche, dadurch **gekennzeichnet**, daß das Sperrventil (33) so ausgebildet und angeordnet ist, daß es in seiner Sperrstellung durch den Hauptzylinderdruck gehalten wird.

7. Bremsdruckregelvorrichtung nach einem oder mehreren der vorangegangenen Ansprüche, dadurch **gekennzeichnet**, daß das Sperrventil (33) so ausgebildet und angeordnet ist, daß es in seiner Sperrstellung durch den Pumpendruck und Hauptzylinderdruck gehalten wird.

8. Bremsdruckregelvorrichtung nach einem oder mehreren der vorangegangenen Ansprüche, dadurch **gekennzeichnet**, daß das Drosselorgan als Blende ausgebildet ist.

9. Bremsdruckregelvorrichtung nach einem oder mehreren der vorangegangenen Ansprüche, dadurch **gekennzeichnet**, daß das Drosselorgan als Strombegrenzungsventil (59) ausgebildet ist.

10. Bremsdruckregelvorrichtung nach einem oder mehreren der vorangegangenen Ansprüche, dadurch **gekennzeichnet**, daß strömungsmäßig zwischen dem Drosselorgan, insbesondere dem Strombegrenzungsventil (59), und dem Radzylinder (43) eine Blende oder Drossel (60) angeordnet ist.

11. Bremsdruckregelvorrichtung nach einem oder mehreren der vorangegangenen Ansprüche, dadurch **gekennzeichnet**, daß die Wicklungen des Stators (17) und/oder des Ankers (18) des Antriebsmotors für die Pumpen so ausgebildet sind, daß sie den axialen Schub des Ankers beim Start des Motors verstärken.

12. Bremsdruckregelvorrichtung nach Anspruch 11, dadurch **gekennzeichnet**, daß die Wicklungen des Stators (17) und/oder des Ankers (18) des Antriebsmotors für die Pumpen konisch ausgebildet sind.

## Claims

1. A brake pressure control system, in particular for automotive vehicles, with an anti-locking control system (ABS) and/or with a traction slip control system (TCS), which operates with fluid, in particular with a hydraulic pressure fluid, being comprised of a master cylinder (3), one or more wheel cylinders (1, 2) for wheel brakes, a pressure modulator comprising a plurality of valve elements for the modulation of the hydraulic pressure in the wheel cylinders (1, 2) of the wheel brakes during a brake pressure control mode, at least one motor (14) including a rotor (15, 66) used to drive by its rotation at least one pump to generate a hydraulic fluid, in particular a hydraulic pressure, and an electronic controller,
**characterized** in that at least a part of the rotor (15, 66) of the motor is an axially movable thrust member actuating at least one valve element (33, 6, 7) of the pressure modulator.

2. A brake pressure control system as claimed in claim 1, in which the pressure modulator includes inlet valves (6, 7) for the wheel cylinders (1, 2),
**characterized** in that at least one inlet valve (6, 7) is configured and positioned so as to be actuatable by the thrust member (22).

3. A brake pressure control system as claimed in claim 1 or in claim 2,
**characterized** in that at least two inlet valves (6, 7) are configured and positioned so as to be actuatable by the thrust member (22), by way of a force distributing mechanism, preferably a balance beam (23).

4. A brake pressure control system as claimed in any one or more of the preceding claims,
**characterized** in that a valve element (shut-off valve) (33) is configured and positioned such that, when actuated by the thrust member (49), it blocks a first unrestricted connection between the master cylinder (37) and the wheel cylinder (43), in that in the event of blocking of the first unrestricted connection the pressure fluid flow is conducted by way of a second connection from the pump (48) and the master cylinder (37) through a restriction member (59) to the wheel cylinder (43).

5. A brake pressure control system as claimed in anyone or in several of the preceding claims,
**characterized** in that the shut-off valve (33) is configured and positioned such that it is maintained in its blocking position by the pump pressure.

6. A brake pressure control system as claimed in anyone or in several of the preceding claims,
**characterized** in that the shut-off valve (33) is configured and positioned such that it is maintained in its blocking position by the master cylinder pressure.

7. A brake pressure control system as claimed in anyone or in several of the preceding claims,
**characterized** in that the shut-off valve (33) is configured and positioned such that it is maintained in its blocking position by the pump pressure and the master cylinder pressure.

8. A brake pressure control system as claimed in anyone or in several of the preceding claims,
**characterized** in that the restriction member is an orifice.

9. A brake pressure control system as claimed in anyone or in several of the preceding claims,
**characterized** in that the restriction member is a flow limiting valve (59).

10. A brake pressure control system as claimed in anyone or in several of the preceding claims,
**characterized** in that, in terms of flow, an orifice or a restrictor (60) is positioned between the restriction member, in particular the flow limiting valve (59), and the wheel cylinder (43).

11. A brake pressure control system as claimed in anyone or in several of the preceding claims,
**characterized** in that the windings of the stator (17) and/or the rotor (18) of the driving motor for the pumps are configured such that they boost the axial thrust of the rotor when the motor is started.

12. A brake pressure control system as claimed in claim 11,
**characterized** in that the windings of the stator (17) and/or the rotor (18) of the driving motor for the pumps have a conical design.

## Revendications

1. Dispositif de régulation de pression de freinage, notamment pour véhicules automobiles comportant un système de régulation antiblocage (ABS) et/ou un système de régulation du glissement de traction (ASR) qui fonctionne avec un agent de pression constitué d'un fluide, notamment hydraulique, comprenant un maître-cylindre (3), un ou plusieurs cylindres de roue (1, 2) associés à des freins de roue, un modulateur de pression comportant plusieurs éléments de valve et servant à modifier la pression hydraulique dans les cylindres de roue (1, 2) des freins de roue pendant un mode de régulation de pression de freinage, au moins un moteur (14) comportant un induit (15, 66) dont le mouvement de rotation sert à entraîner au moins une pompe destinée à produire une pression de fluide, notamment hydraulique, et un régulateur électronique, caractérisé en ce qu'au moins une partie de l'induit (15, 66) du moteur est réalisée sous forme d'un organe de poussée, mobile axialement, qui actionne au moins un élément de valve (33, 67) du modulateur de pression.

2. Dispositif de régulation de pression de freinage selon la revendication 1, dans lequel le modulateur de pression comprend des valves d'entrée (6, 7) associées aux cylindres de roue (1, 2), caractérisé en ce qu'au moins une valve d'entrée (6, 7) est agencée et disposée de façon à pouvoir être commutée au moyen de l'organe de poussée (22).

3. Dispositif de régulation de pression de freinage selon la revendication 1 ou 2, caractérisé en ce qu'au moins deux valves d'entrée (6, 7) sont agencées et disposées de façon à pouvoir être commutées au moyen de l'organe de poussée (22) par l'intermédiaire d'un mécanisme de répartition de force, de préférence par l'intermédiaire d'un fléau de balance (23).

4. Dispositif de régulation de pression de freinage selon une ou plusieurs des revendications précédentes, caractérisé en ce qu'un élément de valve (valve de blocage) (33) est agencé et disposé de façon que, sous l'effet de son actionnement au moyen de l'organe de poussée (49), il bloque une première liaison, non étranglée, entre le maître-cylindre (37) et le cylindre de roue (43) et que, lorsque la première liaison non étranglée est bloquée, le flux d'agent de pression est envoyé, par l'intermédiaire d'une seconde liaison, de la pompe (48) et du maître-cylindre (37) au cylindre de roue (43) en passant par un organe d'étranglement (59).

5. Dispositif de régulation de pression de freinage selon une ou plusieurs des revendications précédentes, caractérisé en ce que la valve de blocage (33) est agencée et disposée de façon à être maintenue dans sa position de blocage au moyen de la pression de pompe.

6. Dispositif de régulation de pression de freinage selon une ou plusieurs des revendications précédentes, caractérisé en ce que la valve de blocage (33) est agencée et disposée de façon à être maintenue dans sa position de blocage au moyen de la pression de maître-cylindre.

7. Dispositif de régulation de pression de freinage selon une ou plusieurs des revendications précédentes, caractérisé en ce que la valve de blocage (33) est agencée et disposée de façon à être maintenue dans sa position de blocage au moyen de la pression de pompe et de la pression de maître-cylindre.

8. Dispositif de régulation de pression de freinage selon une ou plusieurs des revendications précédentes, caractérisé en ce que l'organe d'étranglement est réalisé sous forme d'un orifice calibré.

9. Dispositif de régulation de pression de freinage selon une ou plusieurs des revendications précédentes, caractérisé en ce que l'organe d'étranglement est réalisé sous forme d'une valve de limitation de débit (59).

10. Dispositif de régulation de pression de freinage selon une ou plusieurs des revendications précédentes, caractérisé en ce qu'un orifice calibré ou étranglement (60) est disposé suivant l'écoulement entre l'organe d'étranglement, notamment la valve de limitation de débit (59), et le cylindre de roue (43).

11. Dispositif de régulation de pression de freinage selon une ou plusieurs des revendications précédentes, caractérisé en ce que les enroulements du stator (17) et/ou de l'induit (18) du moteur d'entraînement prévu pour les pompes sont agencés de façon à renforcer la poussée axiale de l'induit lors du démarrage du moteur.

12. Dispositif de régulation de pression de freinage selon la revendication 11, caractérisé en ce que les enroulements du stator (17) et/ou de l'induit (18) du moteur d'entraînement prévu pour les pompes sont réalisés avec une forme conique.
